# FASCICULE DE BREVET EUROPEEN

(11) **EP 1 451 716 B1**
(45) Date de publication et mention de la délivrance du brevet: **23.10.2013**
(21) Numéro de dépôt: 02804240.6
(22) Date de dépôt: 03.12.2002
(51) Int. Cl.: G06F 17/27, G06F 17/28, G06F 9/44

(54) **PROCEDE ET DISPOSITIF D'ADAPTATION DE FICHIERS NUMERIQUES**
VERFAHREN UND ANORDNUNG ZUR ANPASSUNG VON DIGITALEN DATEIEN
METHOD, DEVICE FOR ADAPTING DIGITAL FILES

(30) Priorité: 07.12.2001 FR 0115809
(43) Date de publication de la demande: 01.09.2004
(73) Titulaire: Amadeus S.A.S., 06410 Biot (FR)
(72) Inventeur: BIJAOUI, N., Off. Médit. Brevets d'Inv. et Marques, F-06000 Nice (FR); COQUEL, V., Off. Médit. Brevets d'Inv. et Marques, F-06000 Nice (FR); PIERLOT, L., Off. Médit. Brevets d'Inv. et Marques, F-06000 Nice (FR)
(74) Mandataire: Decobert, Jean-Pascal
(86) Numéro de dépôt international: PCT/FR2002/004139
(87) Numéro de publication internationale: WO 2003/048969

(56) Documents cités:
- EP-A- 0 911 743
- WO-A-01/08006
- US-A- 5 548 508
- US-A- 5 587 902

## Description

La présente invention concerne un procédé et un dispositif d'adaptation de fichiers numériques consistant à repérer des chaînes de caractères dites source dans un fichier à adapter, dit fichier source et à remplacer les sources par des données de substitution dites substituts.

L'invention trouvera son application dans tous domaines où il est nécessaire de définir de façon unique et non ambiguë des caractères ou chaînes de caractères dans un document numérique.

Le domaine applicatif concerne notamment mais non exclusivement les applications accessibles par internet pour la traduction de zones de texte, d'une langue originelle vers une autre langue.

Plus généralement, l'invention pourra être utile dans toute application informatique où l'on souhaite effectuer une adaptation sans altérer le document source.

Le terme adaptation s'entend ici notamment de traduction (remplacement de mots ou de groupes de mots par leur traduction en une autre langue), mais aussi de toutes modifications de forme (taille, style, présentation à l'écran).

La production de documents numériques (fichiers, applications) est de plus en plus vaste.

La plupart des développements s'effectue en langue anglaise.

Pour les utilisateurs de langue maternelle différente, il est pourtant plus pratique de disposer de produits informatiques adaptés à leur propre langue.

De même, selon les souhaits des différents utilisateurs, il est utile de pouvoir adapter la présentation générale des programmes et des fichiers.

Cela est particulièrement le cas dans les applications accessibles par intemet pour lesquelles diverses pages web peuvent être affichées par des utilisateurs d'origines et de langues maternelles très variées.

Pour satisfaire à ces besoins, sans pour autant multiplier le nombre de versions de documents numériques à produire individuellement, on a déjà pensé à opérer des adaptations d'une version source (ou d'origine) selon des critères de langue ou de forme.

Dans ce cadre, il apparaît nécessaire d'identifier sans ambiguïté et donc de façon unique les chaînes de caractères à adapter dans le document source.

Une première solution proposée selon l'art antérieur est d'extraire des chaînes de caractères dépendant des versions (par exemple de chaque langue à utiliser) vers dés fichiers additionnels de stockage de ces ressources.

Selon la version souhaitée, on charge les données issues du fichier de ressource correspondant.

Un problème inhérent à cette technique est qu'il faut distinguer dans chaque document numérique à adapter, les parties dépendantes et indépendantes des versions.

Outre cette distinction interne au document numérique à adapter, il faut gérer des fichiers de ressources additionnelles.

On a également pensé à opérer un marquage des données à adapter dans le document source pour les identifier.

Cependant, ces marques peuvent gêner la compilation ou l'interprétation du document numérique et peuvent être altérées par les modifications futures des sources.

Le document WO 01/08 006 - A1 entre donc dans ce cadre et chaque donnée à adapter doit être déterminée et identifiée dès la création du fichier. Cette technique ne fonctionne pas sur un fichier non spécifique.

Il existe donc un besoin important dans l'identification non invasive de données numériques à adapter dans un document numérique et ce, sans ambiguïté pour tout type de document numérique.

Un premier but de l'invention est de définir sans ambiguïté des chaînes de caractères dans un document numérique en vue d'un traitement ultérieur.

Un autre but de l'invention est d'effectuer une définition des chaînes de caractères à adapter dans le document numérique sans entraîner de modifications susceptibles d'altérer la validité du document.

Selon une variante, l'invention a également l'avantage de permettre un remplacement de données facilité avec des adaptations multiples rendues possibles sans altération de traduction. Notamment, il est possible de prendre en compte des langues différentes pour une même adaptation, par exemple pour une traduction de l'anglais vers le québécois en prenant en compte des données de la langue française.

Un autre avantage de l'invention est sa faible sensibilité aux modifications ultérieures du fichier source.

D'autres buts et avantages apparaîtront au cours de la description qui suit qui présente un mode préféré de réalisation de l'invention qui n'en est cependant pas limitatif.

La présente invention concerne un procédé d'adaptation de fichiers numériques consistant à repérer des chaînes de caractères dites sources dans un fichier à adapter, dit fichier source, et à remplacer les sources par des données de substitution dites substituts, caractérisé par le fait
qu'on repère chaque présence de source dans le fichier source en définissant une cible par :
1° division du fichier source en sections identifiées par un identifiant de section ;
2° sélection d'une source dans une section ;
3° sélection d'une zone de contexte incluant la source sélectionnée ;
4° affectation d'un rang d'occurrence, dans une partie prédéterminée du fichier source, à la source sélectionnée ;

l'identifiant de section, la source sélectionnée et son rang d'occurrence, la zone de contexte sélectionnée constituant des attributs de chaque cible.

Selon des variantes préférées, ce procédé est tel que :
- la partie prédéterminée du fichier source est la zone de contexte sélectionnée et on affecte un rang d'occurrence, dans la section, à la zone de contexte sélectionnée.
- on associe un identifiant unique à chaque cible définie et on stocke les attributs de définition des cibles et les identifiants dans un fichier modèle.
- on crée au moins un jeu de données de substitution contenant les substituts des sources et on associe les cibles et les substituts par l'identifiant.
- on remplace les sources du fichier source par :
   1° localisation de chaque cible par calcul de sa position dans le fichier source ;
   2° chargement d'un jeu de données de substitution ;
   3° extraction des substituts du jeu de données de substitution par
      - parcours des substituts, recherche, pour chacun, de la cible associée,
      - stockage des substituts pour lesquels une cible associée existe en les classant par ordre de position de la cible associée dans le fichier source.
- on utilise plusieurs jeux de données de substitution ;
- on affecte un ordre de priorité à chaque jeu de données de substitution :
- on effectue les étapes de chargement de jeu de données de substitution et d'extraction des substituts successivement pour chaque jeu de données de substitution par ordre décroissant de priorité.
- on remplace les cibles par leurs substituts par ordre décroissant de position dans le fichier source.
- on vérifie l'exactitude de la définition des cibles d'un fichier source par :
   - comparaison, pour chaque cible, de ses attributs avec le contenu du fichier source,
   - exclusion des cibles pour lesquelles aucune source correspondant à l'attribut source de la cible n'a été trouvée dans le fichier source ;
   - si au moins une source correspondant à l'attribut source de la cible est trouvée sans que les autres attributs de la cible ne lui correspondent, on stocke ladite source pour traitement ultérieur individuel.

L'invention concerne également un dispositif apte à mettre en oeuvre le procédé.

Les dessins ci-joints sont donnés à titre d'exemples et ne sont pas limitatifs de l'invention. Ils représentent seulement un mode de réalisation de l'invention et permettront de la comprendre aisément.

La figure 1 illustre des phases du procédé selon l'invention pour la définition de cibles dans un document numérique.

La figure 2 montre une phase préliminaire pour la substitution de chaînes de caractères source par des chaînes de substitution.

Les figures 3 et 4 montrent deux phases de construction successives d'un fichier adapté par substitution des sources, en relation avec la figure 2.

La figure 5 illustre une possibilité supplémentaire de vérification de l'exactitude du modèle de cibles défini.

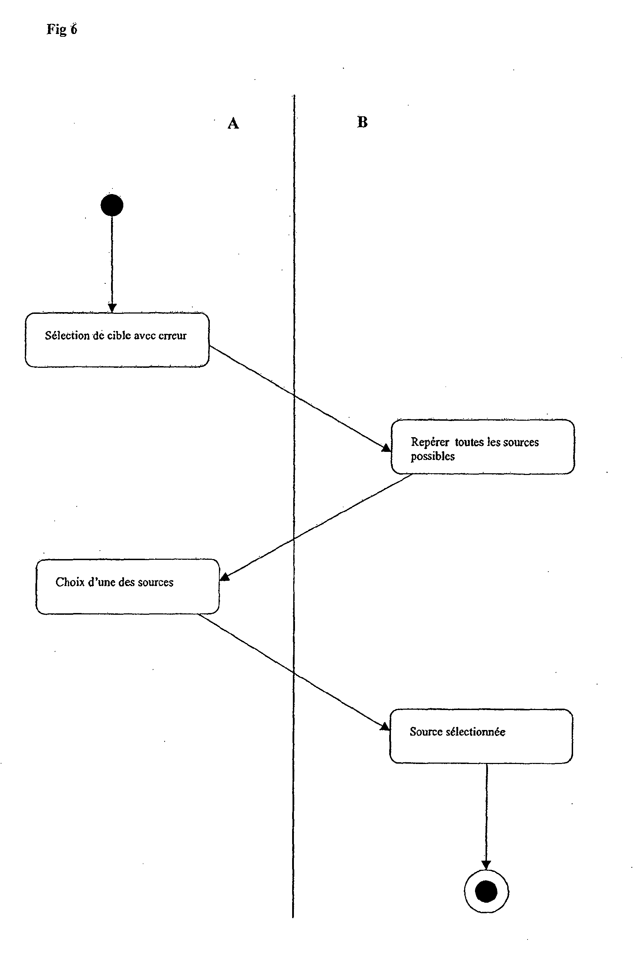

La figure 6 montre, consécutivement à la vérification de la figure 5, une possibilité de rectification du document.

La figure 7 montre de façon schématique les différentes données numériques stockées et utilisées pour la mise en oeuvre de l'invention.

Le procédé selon l'invention pourra être mis en oeuvre par un dispositif du type informatique avec des moyens actuellement utilisés dans le domaine considéré.

Particulièrement, le dispositif du type informatique pourra être constitué par un ordinateur comprenant une unité centrale pourvue d'un processeur et de moyens de mémorisation de données numériques, de moyens de saisie de données et de pointage ainsi que d'un moniteur d'affichage.

Le procédé d'adaptation ici présenté comprend particulièrement une étape de définition sans ambiguïté de cibles dans le fichier numérique à adapter, chaque cible intégrant une chaîne de caractères appelée ci-après source, à adapter.

Il est à noter que ces étapes de définition de cibles peuvent être mises en oeuvre pour d'autres applications que l'adaptation de fichiers numériques.

Pour effectuer cette définition sans ambiguïté de cibles pour le repérage des sources dans le fichier à adapter, on met en oeuvre des étapes opératoires successives.

On affecte à chaque cible différents attributs permettant de la définir sans ambiguïté. Ces attributs sont un identifiant de section (ID), la source sélectionnée et son rang d'occurrence, la zone de contexte sélectionnée et son rang d'occurrence. On décrit ci-après le mode opératoire de définition de ces différents attributs.

On commence par diviser le fichier source en sections, chaque section étant identifiée par un identifiant de section (ID). Cette division est opérée en une ou plusieurs sections.

Dans l'exemple d'une programmation en Javascript, la division en sections pourra correspondre à celle de chaque fonction, et on attribuera à titre d'identifiant de section le nom de la fonction.

On effectue ensuite une sélection de sources dans une section.

Cette sélection peut être opérée par un utilisateur, notamment un utilisateur chargé de créer le modèle de cibles à adapter.

On sélectionne ainsi la chaîne de caractères correspondant à la source désirée au sein de la section.

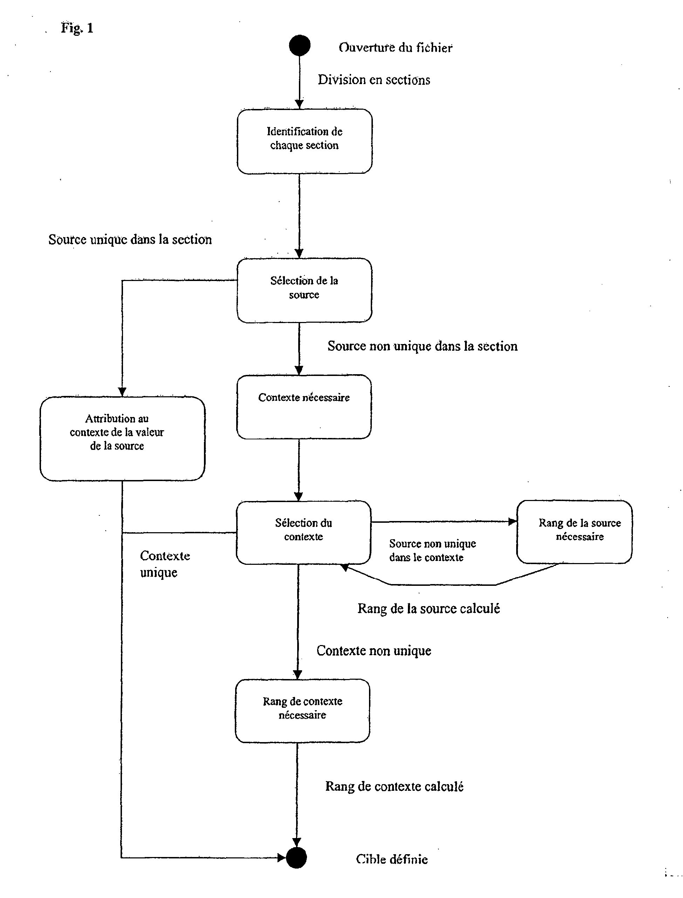

Tel qu'indiqué en figure 1, deux cas peuvent se présenter à ce niveau.

Il est d'une part possible que la source soit unique dans la section considérée auquel cas on effectue une sélection de zone de contexte correspondant à la valeur de la source.

Dans le cas où la source n'est pas unique dans la section, la sélection d'une zone de contexte plus large que la source permet de préciser la définition de la cible. Dans certains cas (et le plus souvent possible) cette précision de définition est suffisante pour lever toute ambiguïté d'identification de la cible.

Pour compléter la définition de la cible sans que cela soit pour autant nécessaire systématiquement à chaque définition de cibles, on affecte des rangs d'occurrence aux sources et aux contextes.

On détermine le rang d'occurrence de la source dans une partie prédéterminée du fichier source. Cette partie peut être le fichier entier, une section ou encore, préférentiellement une zone de contexte.

Dans ce dernier cas, on affecte un rang d'occurrence au sein de la section considérée, à la zone de contexte sélectionnée.

On affecte également un rang d'occurrence, dans la zone de contexte sélectionnée, à la source sélectionnée.

Ces étapes sont reprises synoptiquement en figure 1.

On donne ci-après plusieurs exemples correspondant à différents cas de définition de cibles, selon l'unicité ou la multiplicité de sources et de zones de contexte dans la section considérée.

Les exemples ci-après sont donnés pour une programmation en Javascript et l'identifiant de section est défini sous forme du nom de la fonction. Le contexte sélectionné est encadré, la source sélectionnée est soulignée.

Bien entendu, cet exemple n'est pas limitatif de la définition des cibles.

### Exemple 1 : cas d'une source unique dans la section

```
  Function myFunc () {
  ...
  var html =
  ' <td align="center" > city </td>'
  '+<td align="center" > country </td>'
  '+<td align="center" > country </td>'
  ...
  }
```

| Identifiant de section | Source | Zone de contexte | Rang d'occurrence du contexte/occurr ence totale du contexte | Rang d'occurrence de la source dans le contexte |
|---|---|---|---|---|
| myFunc | city | city | 1/1 | 1 |

### Exemple 2 : source non unique et zone de contexte unique dans la section

```
  function myFunc () {
   ...
   var html =
   ' <td align=" [center" > city] </td>'
   '+<td align="center" > country </td>'
  '+<td align="center" > country </td> '
  ...
  }
```

| Identifiant de section | Source | Zone de contexte | Rang d'occurrence du contexte/occurr ence totale du contexte | Rang d'occurrence de la source dans le contexte |
|---|---|---|---|---|
| myFunc | center | center" >city | 1/1 | 1 |

### Exemple 3 : source et zone de contexte non unique dans la section

```
  function myFunc () {
  ...
  var html =
  '<td align="center" > city </td>'
  ['+<td align="center" > country </td>']
  '+<td align="center" > country </td>'
  ...
  }
```

| Identifiant de section | Source | Zone de contexte | Rang d'occurrence du contexte/occurr ence totale du contexte | Rang d'occurrence de la source dans le contexte |
|---|---|---|---|---|
| myFunc | Country | '+<td | 1/2 | 1 |
| | | align="center" >country</td>' | | |

### Exemple 4 : source non unique dans la zone de contexte sélectionné

```
   function myFunc () {
   ...
   var html =
   ' +<td class="field" align="center" > field 1 </td>'
   '+<td [class="field" align="center" > field 2 ] </td>'
   ...
   ...}
```

| Identifiant de section | Source | Zone de contexte | Rang d'occurrence du contexte/occurr ence totale du contexte | Rang d'occurrence de la source dans le contexte |
|---|---|---|---|---|
| myFunc | field | class="field" align="center"> field 2 | 1/1 | 2 |

On constate que cette méthode de définition permet systématiquement d'obtenir une définition unique et sans ambiguïté des sources dans le document numérique.

Dans certains cas, certains attributs de la cible ne sont pas nécessaires à une définition non ambiguë et seront alors renseignés par défaut ou non utilisés.

Cette méthode de définition est particulièrement mise en oeuvre selon l'invention pour réaliser une adaptation des documents numériques.

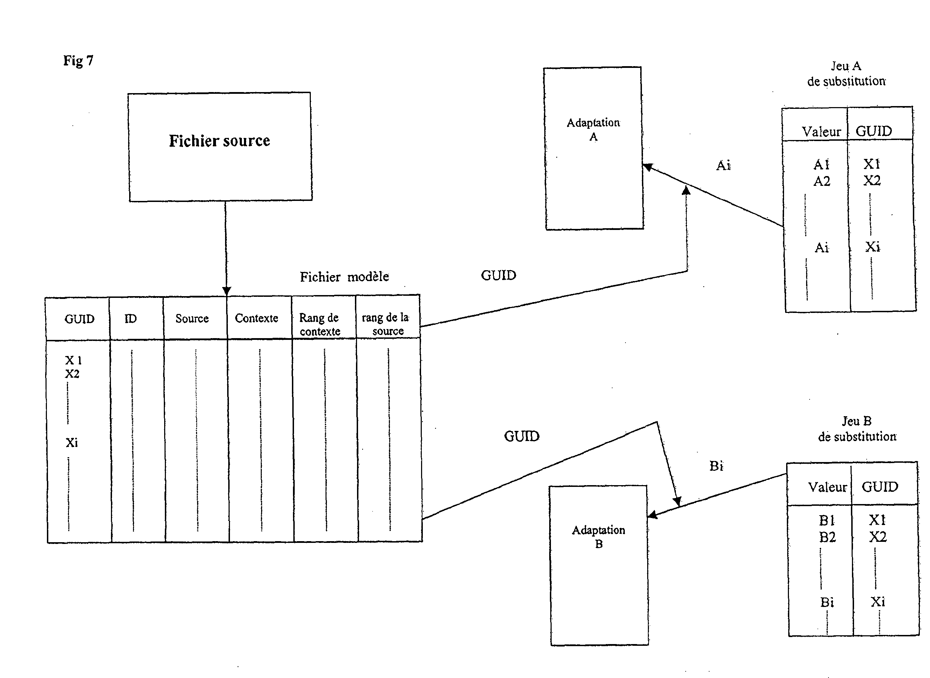

Dans ce cadre, on crée un fichier modèle particulièrement schématisé en figure 7 dans lequel on attribue à chaque cible un identifiant (appelé GUID en référence aux figures) unique.

On stocke dans le fichier modèle les attributs de définition de chaque cible et leur identifiant tel que cela est représenté.

Ce fichier modèle permet par la suite d'effectuer toutes les opérations et regroupent tous les renseignements nécessaires à la définition des sources relevées dans le fichier source.

Dans le cadre d'une adaptation de fichiers numériques, on crée au moins un jeu de données de substitution contenant les substituts des sources à prendre en compte.

Ce ou ces jeux de données de substitution sont stockés séparément dans la base de données du dispositif.

Ils sont schématisés par les tableaux intitulés JEU A et JEU B dans la figure 7.

On y voit également que, à chaque valeur de substitut A1, A2, Ai, est associé l'identifiant GUID afin d'établir une correspondance entre chaque cible du fichier modèle et la valeur associée du jeu de substitution.

Il est alors possible d'effectuer la substitution proprement dite des sources du fichier numérique par les substituts contenus dans les jeux de données de substitution.

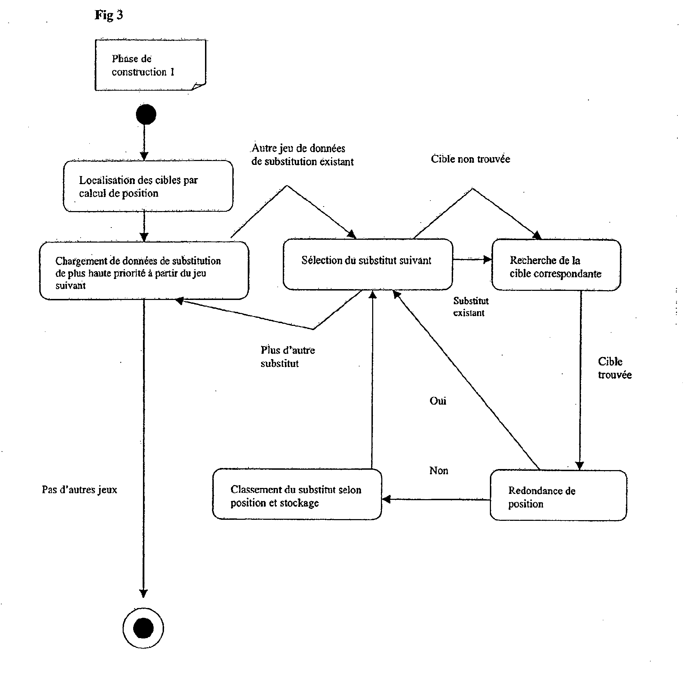

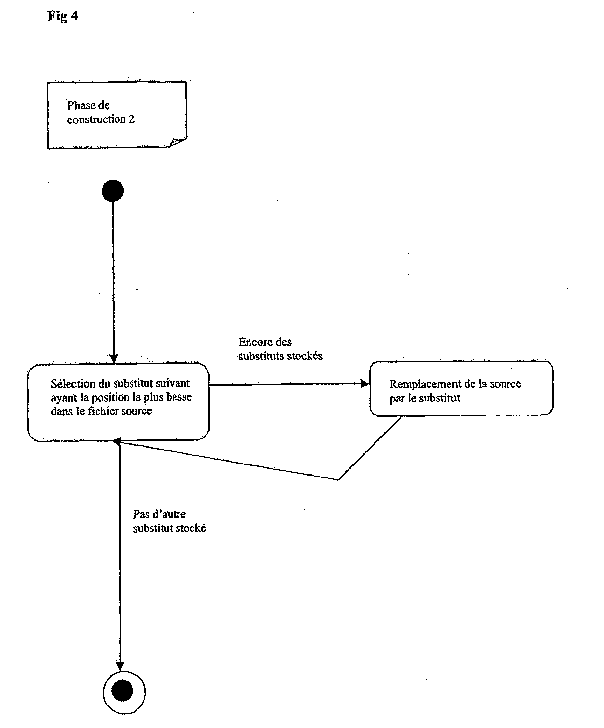

Pour ce faire, en référence aux figures 3 et 4, on commence par effectuer une localisation des cibles dans le fichier source par calcul de leur position.

Particulièrement, on utilisera un repérage d'offsets pour établir une position des chaînes de caractères source dans le fichier numérique.

Une fois les coordonnées de chaque source ainsi établies, on effectue un chargement du jeu de données de substitution à utiliser.

On étudiera plus particulièrement par la suite la possibilité d'effectuer une adaptation multiple c'est à dire utilisant plusieurs jeux de données de substitution.

Une fois qu'un jeu de données de substitution est chargé, on extrait les substituts dudit jeu à utiliser par les opérations suivantes.

En référence à la figure 3, on commence par parcourir les différents substituts et à rechercher pour chacun d'eux si une cible leur est associée.

Si c'est le cas, on classe le substitut suivant la position d'offsets de la source dans le fichier numérique et on stocke ces informations.

Préalablement, on vérifie d'éventuelles redondances de position afin de s'assurer que la source correspondante à ce substitut n'a pas déjà été prise en compte.

Une fois que les différents substituts ont été passés en revue, on a obtenu un stockage temporaire de différents substituts à utiliser pour l'adaptation du fichier source et on connaît en correspondance la position des sources à adapter avec ces substituts.

Il est alors possible de remplacer chaque source présente dans le fichier source par son substitut tel que défini précédemment et ce, par ordre décroissant de position dans le fichier source.

L'ordre décroissant ainsi utilisé a l'avantage de ne pas modifier les calculs d'offsets effectués préalablement pour les données présentes plus haut dans le fichier source.

On notera que cette étape de remplacement par ordre décroissant d'offset peut être opérée avec d'autres principes de définition de cibles et un autre mode opératoire de création de jeux de substituts.

Tel qu'indiqué précédemment, on peut effectuer l'adaptation multiple c'est à dire prendre en compte au moins deux jeux de données de substitution pour effectuer l'adaptation.

On pourra ainsi, parmi les jeux de données de substitution, définir un jeu prioritaire pour lequel, si les données de substitution sont présentes, on utilisera leur valeur pour l'adaptation du fichier source.

S'il n'existe pas de substitut aux sources du fichier source à adapter présent dans le jeu de données de substitution prioritaire, on effectue alors une substitution en utilisant des jeux de données de substitution de moindre priorité.

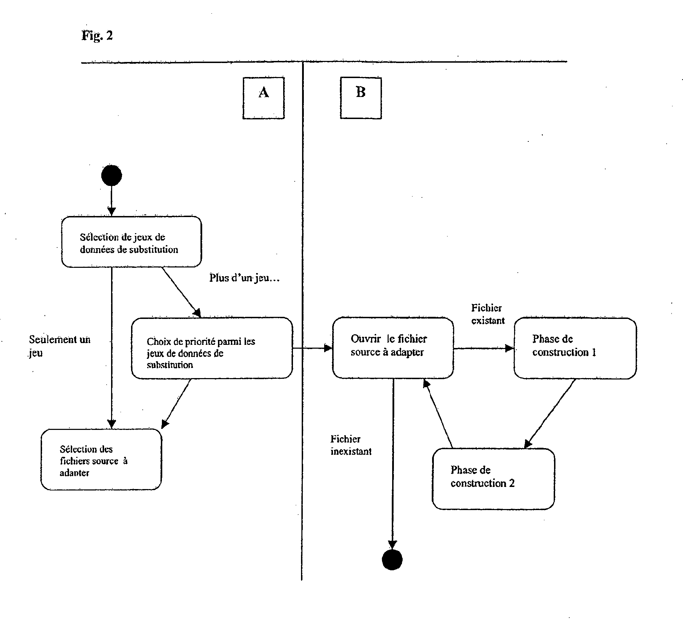

Cette étape est particulièrement représentée à la figure 2 dans laquelle on effectue une sélection de jeux de données de substitution à utiliser pour l'adaptation considérée.

Si plus d'un jeu est sélectionné, l'utilisateur est amené à choisir un ordre de priorité parmi ces différents jeux de données de substitution.

On opère alors les phases de construction du fichier d'adaptation correspondant aux étapes précédemment décrites particulièrement aux références aux figures 3 et 4.

Une fois ces étapes réalisées avec le premier jeu de substitution (celui qui a le plus haut degré de priorité) on renouvelle l'opération successivement avec les autres jeux de substitution par ordre décroissant de leur priorité.

Une fois que les différents jeux de substitution ont été utilisés, l'adaptation est terminée.

Selon une autre variante de l'invention, il est possible de vérifier l'exactitude de la définition de cibles présentes dans le fichier modèle par rapport au fichier source.

On peut notamment, selon cette possibilité, vérifier la justesse des données présentes dans le fichier modèle par exemple si le fichier source a été modifié.

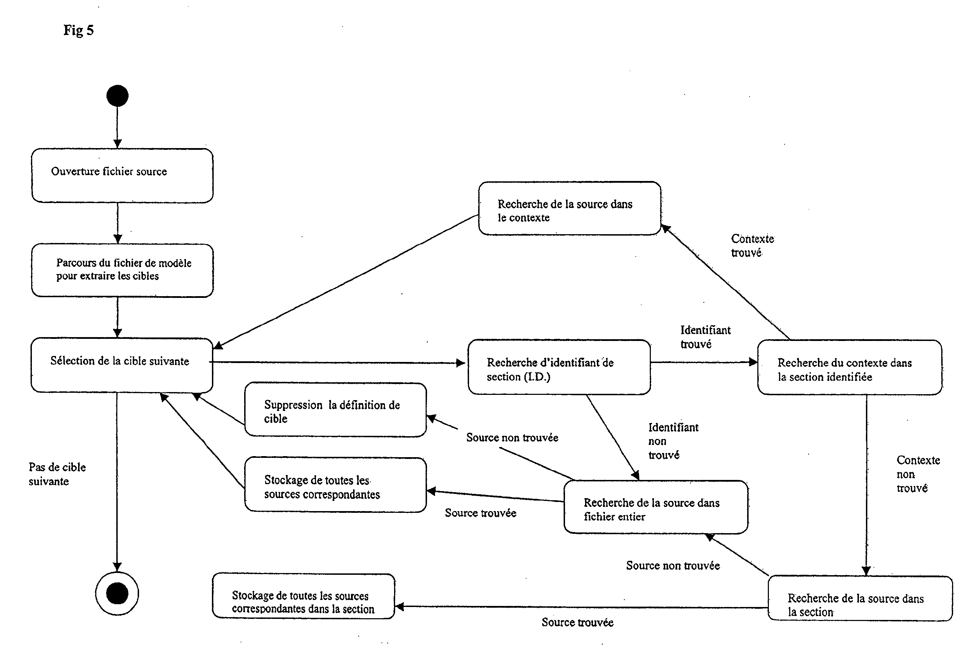

Cette vérification s'effectue telle que représentée en figure 5, par comparaison, pour chaque cible, de ses attributs tels que contenus dans le fichier modèle avec le contenu du fichier source.

Les différentes éventualités sont prises en compte dans le synoptique de la figure 5.

La comparaison commence par la recherche de l'identifiant de section (ID) attribué à la cible.

Si l'identifiant est trouvé, la recherche se poursuit par le contexte dans cette section.

Si le contexte est trouvé, la recherche s'avère fructueuse et on passe à la cible suivante.

Si le contexte n'est pas trouvé, on recherche alors la source dans l'entière section identifiée.

Si la source est trouvée dans cette section, on stocke cette source et d'éventuelles autres sources relevées dans la section.

Si aucune source correspondante n'est trouvée dans la section, on effectue une recherche de cette source dans l'intégralité du fichier.

Si aucune source n'est trouvée dans le fichier, on exclut (en supprimant ou en ignorant) alors l'intégralité de la définition de la cible et de ses attributs dans le fichier modèle.

Si une (ou plusieurs sources) est trouvée dans le fichier source, on la stocke pour effectuer un traitement ultérieur individuel.

Ce traitement peut consister en une intervention d'un utilisateur qui passe en revue l'ensemble des cibles où une erreur a été constatée, obtient de la part du dispositif toutes les sources possibles correspondantes (obtenues suivant le procédé précité) et effectue le choix d'une de ses sources en correspondance avec la cible.

Une fois cette source sélectionnée, le fichier modèle est rectifié avec les attributs correspondants.

Ces étapes de révision et de rectification éventuelles des cibles peuvent être mises en oeuvre avec d'autres types de définitions des cibles et d'autres types d'opérations de remplacement des cibles par des substituts dans le fichier.

Elles peuvent donc être mises en oeuvre de façon indépendante.

## Revendications

1. Procédé d'adaptation de fichiers numériques consistant à repérer des chaînes de caractères dites sources dans un fichier de programme à adapter, dit fichier source, et à remplacer les sources par des données de substitution dites substituts, **caractérisé par** le fait
* qu'on repère chaque présence de source dans le fichier source en définissant une cible par :
1° division du fichier source en sections identifiées par un identifiant de section (ID) ;
2° sélection d'une source dans une section ;
3° sélection d'une zone de contexte incluant la source sélectionnée ;
4° affectation d'un rang d'occurrence, dans une partie prédéterminée du fichier source, à la source sélectionnée;
l'identifiant de section (ID), la source sélectionnée et son rang d'occurrence, la zone de contexte sélectionnée constituant des attributs de chaque cible et,
* qu'on associe un identifiant unique (GUID) à chaque cible définie et on stocke les attributs de définition des cibles et les identifiants dans un fichier modèle.
* qu'on crée au moins un jeu de données de substitution contenant les substituts des sources et on associe les cibles et les substituts par l'identifiant (GUID).

2. Procédé selon la revendication 1 **caractérisé par le fait**
**que** la partie prédéterminée du fichier source est la zone de contexte sélectionnée et qu'on affecte un rang d'occurrence, dans la section, à la zone de contexte sélectionnée.

3. Procédé selon la revendication 1 ou 2, **caractérisé par le fait**
**qu'**on remplace les sources du fichier source par :
1° localisation de chaque cible par calcul de sa position dans le fichier source ;
2° chargement d'un jeu de données de substitution ;
3° extraction des substituts du jeu de données de substitution par
- parcours des substituts, recherche, pour chacun, de la cible associée,
- stockage des substituts pour lesquels une cible associée existe en les classant par ordre de position de la cible associée dans le fichier source.

4. Procédé selon la revendication 3, **caractérisé par le fait que**
- on utilise plusieurs jeux de données de substitution ;
- on affecte un ordre de priorité à chaque jeu de données de substitution :
- on effectue les étapes de chargement de jeu de données de substitution et d'extraction des substituts successivement pour chaque jeu de données de substitution par ordre décroissant de priorité.

5. Procédé selon la revendication 3 ou 4, **caractérisé par le fait**
**qu'**on remplace les cibles par leurs substituts par ordre décroissant de position dans le fichier source.

6. Procédé selon l'une quelconque des revendications précédentes, **caractérisé par le fait**
**qu'**on vérifie l'exactitude de la définition des cibles d'un fichier source par :
- comparaison, pour chaque cible, de ses attributs avec le contenu du fichier source,
- exclusion des cibles pour lesquelles aucune source correspondant à l'attribut source de la cible n'a été trouvée dans le fichier source ;
- si au moins une source correspondant à l'attribut source de la cible est trouvée sans que les autres attributs de la cible ne lui correspondent, on stocke ladite source pour traitement ultérieur individuel.

## Patentansprüche

1. Verfahren zur Anpassung digitaler Dateien, bestehend aus einem Lokalisieren von als Quellen bezeichneten Zeichenketten in einer als Quelldatei bezeichneten anzupassenden Programmdatei und aus einem Ersetzen der Quellen durch als Ersatzmittel bezeichnete Ersatzdaten, **dadurch gekennzeichnet**
* jedes Vorhandensein einer Quelle in der Quelldatei lokalisiert wird durch Definieren eines Ziels durch
1. Aufteilung der Quelldatei in Abschnitte, die durch eine Abschnittskennung (ID) gekennzeichnet werden;
2. Auswahl einer Quelle in einem Abschnitt;
3. Auswahl einer Kontextzone, welche die ausgewählte Quelle enthält;
4. Zuweisung eines Ranges des Vorkommens in einem vorbestimmten Teil der Quelldatei zu der ausgewählten Quelle,
wobei die Abschnittskennung (ID), die ausgewählte Quelle und ihr Rang des Vorkommens, die ausgewählte Kontextzone Attribute jedes Ziels bilden, und
* jedem definierten Ziel eine eindeutige Kennung (GUID) zugeordnet wird und die Definitionsattribute der Ziele und die Kennungen in einer Modelldatei gespeichert werden,
* wenigstens ein Satz von Ersatzdaten erzeugt wird, der die Ersatzmittel der Quellen enthält, und den Zielen und den Ersatzmitteln die Kennung (GUID) zugeordnet wird.

2. Verfahren nach Anspruch 1, **dadurch gekennzeichnet,**
**dass** der vorbestimmte Teil der Quelldatei die ausgewählte Kontextzone ist und dass der ausgewählten Kontextzone ein Rang des Vorkommens in dem Abschnitt zugewiesen wird.

3. Verfahren nach Anspruch 1 oder 2, **dadurch gekennzeichnet,**
**dass** die Quellen der Quelldatei ersetzt werden durch:
1. einen Ort jedes Ziels durch Berechnung seiner Position in der Quelldatei;
2. eine Ladung eines Satzes von Ersatzdaten;
3. eine Extraktion der Ersatzmittel des Satzes von Ersatzdaten durch
- ein Laufen durch die Ersatzmittel und für jedes ein Suchen nach dem zugeordneten Ziel,
- ein Speichern der Ersatzmittel, für die ein zugeordnetes Ziel existiert, indem sie nach der Reihenfolge der Position des zugeordneten Ziels in der Quelldatei klassifiziert werden.

4. Verfahren nach Anspruch 3, **dadurch gekennzeichnet, dass**
- mehrere Sätze von Ersatzdaten verwendet werden;
- jedem Satz von Ersatzdaten eine Prioritätsreihenfolge zugewiesen wird;
- die Schritte der Ladung des Satzes von Ersatzdaten und der Extraktion der Ersatzmittel nacheinander für jeden Satz von Ersatzdaten in der Reihenfolge abnehmender Priorität ausgeführt werden.

5. Verfahren nach Anspruch 3 oder 4, **dadurch gekennzeichnet,**
**dass** die Ziele durch ihre Ersatzmittel in abnehmender Positionsreihenfolge in der Quelldatei ersetzt werden.

6. Verfahren nach einem der vorhergehenden Ansprüche, **dadurch gekennzeichnet,**
**dass** die Genauigkeit der Definition der Ziele einer Quelldatei überprüft werden durch:
- einen Vergleich ihrer Attribute mit dem Inhalt der Quelldatei für jedes Ziel;
- einen Ausschluss der Ziele, für welche keine Quelle entsprechend dem Quellenattribut des Ziels in der Quelldatei gefunden wurde;
- wenn wenigstens eine Quelle entsprechend einem Quellenattribut des Ziels gefunden wird, ohne dass die anderen Attribute des Ziels dieser entsprechen, Speichern dieser Quelle für eine spätere individuelle Bearbeitung.

## Claims

1. A method for adapting digital files consisting in marking character strings, called the sources, in a program file to be adapted, called the source file, and substituting substitution data, called the substitutes, for the sources, **characterized in that**
* each presence of source in the source file is marked by defining a target through the following steps:
1°) division of the source file into sections identified by a section identifier (ID);
2°) selection of a source in a section;
3°) selection of a context area including the selected source;
4°) assigning a rank of occurrence, in a predetermined portion of the source file, to the selected source;
- with the section identifier (ID), the selected source and the rank of occurrence thereof, and the selected context area constituting attributes of each target and,
* a unique identifier (GUID) is associated with each defined target and the targets defining attributes and the identifiers are stored in a template file,
* at least one set of substitution data containing the sources substitutes is created and the targets and the substitutes are associated through the identifiers (GUID).

2. A method according to claim 1, **characterized in that**
- the predetermined portion of the source file is the selected context area and a rank of occurrence is assigned, in the section, to the selected context area.

3. A method according to claims 1 or 2, **characterized in that**
- the sources of the source file are replaced by :
1°) locating each target though the calculation of the position thereof in the source file;
2°) loading a set of substitution data;
3°) retrieving the substitutes from the set of substitution data by:
- browsing the substitutes and searching, for each one, the associated target,
- storing the substitutes for which an associated target exists by classifying same according to the order of position of the associated target in the source file.

4. A method according to claim 3, **characterized in that**:
- several sets of substitution data are used;
- an order of priority is assigned to each set of substitution data:
- the steps of loading the set of substitution data and successively retrieving the substitutes for each set of substitution data in descending order of priority, are executed.

5. A method according to claims 3 or 4, **characterized in that**:
- the substitutes are substituted for the targets according to the descending order of position thereof in the source file.

6. A method according to any one of the preceding claims, **characterized in that**:
- the accuracy of the definition of the targets of a source file is checked by:
- comparing, for each target, the attributes thereof with the contents of the source file,
- excluding the targets for which no source matching the source attribute of the target has been found in the source file;
- if at least one source matching the source attribute of the target is found without the other attributes of the target matching same, said source is stored for further individual processing.
